# EUROPEAN PATENT SPECIFICATION

(11) **EP 3 744 535 B1**
(45) Date of publication and mention of the grant of the patent: **05.01.2022**
(21) Application number: 20156136.2
(22) Date of filing: 07.02.2020
(51) Int. Cl.: B60C 11/03, B60C 11/12, B60C 11/13

(54) **TIRE**
REIFEN
PNEUMATIQUE

(30) Priority: 12.02.2019 US 201916273548
(43) Date of publication of application: 02.12.2020
(73) Proprietor: The Goodyear Tire & Rubber Company, Akron, OH 44316 (US)
(72) Inventor: HARTIKAINEN, Lassi Mikael, L-1128 Luxembourg (LU); MAJERUS, Julien Dominique Gilbert, B-6600 Bastogne (BE); VIRLEZ, Geoffrey Stephane Marcel Ghislain, B-6700 Arlon (BE); RUKUNDO, Béni, B-6700 Arlon (BE); THEISSEN, Olaf Matthais Tobias, D-54636 Sefferweich (DE)
(74) Representative: Kutsch, Bernd

(56) References cited:
- WO-A1-2010/000797
- WO-A1-2019/027423
- JP-A- 2013 001 325

## Description

### Field of the Invention

The present patent application is directed to a tire and, in particular, to a tire tread with narrow grooves or sipes in blocks or ribs of the tire tread.

### Background of the Invention

Conventionally, tread design optimization methods tend to impact wet and dry braking in opposite directions. Decoupling/adding cuts may generally improve wet braking distance while higher stiffness/higher contact area may improve dry braking distance. A method for eliminating this trade-off and improving both wet and dry braking would be desirable. A tread block design in accordance with the present invention helps to improve wet and dry braking distance with tilted sipes combined with a chamfer.

WO 2010/000797 A1 discloses tread blocks comprising chamfered inclined sipes. Tread ribs are not disclosed.

JP 2013 001325 A discloses tread elements divided by sipes having a shallow groove at the surface.WO 2019/027423 A1 discloses tread elements divided by sipes, which are inclined away from the main rotational direction.

### Summary of the Invention

The invention relates to a tire in accordance with claim 1 or 15 respectively.

Dependent claims refer to preferred embodiments of the invention.

In accordance with one aspect of the invention, a tire having a tread is disclosed, the tread comprising a contact surface, a middle rib formed by two circumferential grooves extending along a tire circumferential direction, and at least one or two further ribs disposed axially outward from the middle rib and a respective one of the two circumferential grooves, wherein at least one of said middle rib and said at least one or two further ribs comprises a row of circumferentially extending tread elements and a plurality of sipes, wherein the sipes are inclined toward the rotational direction of the tire when moving from the contact surface radially inwardly along the sipes and wherein the tread elements have a chamfer at the respective trailing edge of the respective tread element.

A tire tread with another aspect of the invention, a tire having a tread is disclosed, the tread including a middle rib formed by two circumferential main grooves extending along a tire circumferential direction, a first shoulder rib disposed axially outward from the center rib and one of the circumferential main grooves, and a second shoulder rib disposed axially outward from the center rib and the other of the two circumferential main grooves. The middle rib has a plurality of sipes inclined oppositely with respect to a tire rotational direction when moving along the sipes radially outwardly toward the contact surface such that the sipes extend farther away from a rotational axis of the tire tread as the sipes extend against the tire rotational direction. The middle rib thereby defines a row of circumferentially extending tread elements having chamfers at trailing edges of the tread elements.

According to a preferred aspect of the tire tread, the chamfers extend at an angle between 20 degrees and 40 degrees relative to a radial direction of the tire tread or at an angle between 25 degrees and 35 degrees relative to a radial direction of the tire tread or at an angle of 30 degrees relative to a radial direction of the tire tread.

According to another preferred aspect of the tire tread, the sipes extend at an angle between 10 degrees and 30 degrees relative to a radial direction of the tire tread or at an angle between 17 degrees and 23 degrees relative to a radial direction of the tire tread or at an angle of 20 degrees relative to a radial direction of the tire tread.

According to another preferred aspect of the tire tread, the middle rib has an axial width between 15.0 mm and 30.0 mm or between 17.0 mm and 26.0 mm or 21.5 mm.

According to another preferred aspect of the tire tread, the sipes have a radial depth between 5.0 mm and 7.0 mm or between 5.5 mm and 6.5 mm or of 6.0 mm.

According to another preferred aspect of the tire tread, the sipes have radially upper part and a radially lower part, the chamfers comprising an entire wall of one wall of the radially upper part, the radially upper part having a radial depth between 0.75 mm and 1.75 mm or between 1.00 mm and 1.50 mm or of 1.25 mm.

According to another preferred aspect of the tire tread, the sipes have a radially upper part and a radially lower part, the radially lower part having an uniform circumferential width between 0.50 mm and 1.50 mm or between 0.75 mm and 1.25 mm or of 1.00 mm.

### Definitions

"Annular" means formed like a ring.

"Asymmetric tread" means a tread that has a tread pattern not symmetrical about the centerplane or equatorial plane EP of the tire.

"Axial" and "axially" refer to lines or directions that are parallel to the axis of rotation of the tire.

"Circumferential" and "circumferentially" mean lines or directions extending along the perimeter of the surface of the annular tire or tread parallel to the equatorial plane (EP) and perpendicular to the axial direction.

"Equatorial plane (EP)" means the plane perpendicular to the tire's axis of rotation and passing through the center of its tread; or the plane containing the circumferential centerline of the tread.

"Groove" means an elongated void area in a tread that may extend circumferentially or laterally about the tread in a straight, curved, or zigzag manner. Circumferentially and laterally extending grooves sometimes have common portions. The "groove width" may be the tread surface occupied by a groove or groove portion divided by the length of such groove or groove portion; thus, the groove width may be its average width over its length. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves, which they interconnect, they may be regarded as forming "tie bars" tending to maintain a rib-like character in the tread region involved. As used herein, a groove is intended to have a width large enough to remain open in the tires contact patch or footprint.

"Inner" means toward the inside of the tire and "outer" means toward its exterior.

"Inboard side" means the side of the tire nearest the vehicle when the tire is mounted on a wheel and the wheel is mounted on the vehicle.

"Outboard side" means the side of the tire farthest away from the vehicle when the tire is mounted on a wheel and the wheel is mounted on the vehicle.

"Radial" and "radially" mean directions radially toward or away from the axis of rotation of the tire.

"Sipe" or "incision" means relatively small slots molded into the tread elements of the tire that subdivide the tread surface and preferably improve traction; sipes are designed to close when within the contact patch or footprint, as distinguished from grooves.

"Tread" means a molded rubber component which, when bonded to a tire casing, includes that portion of the tire that comes into contact with the road when the tire is normally inflated and under normal load.

"Tread element" or "traction element" means a rib or a block element.

### Brief Description of the Drawings

The accompanying drawings illustrate examples of the present invention and, together with a general description of the present invention given above, and the detailed description given below, serve to explain the present invention.
FIG. 1 is a schematic orthogonal view of a tire tread in accordance with the present invention;

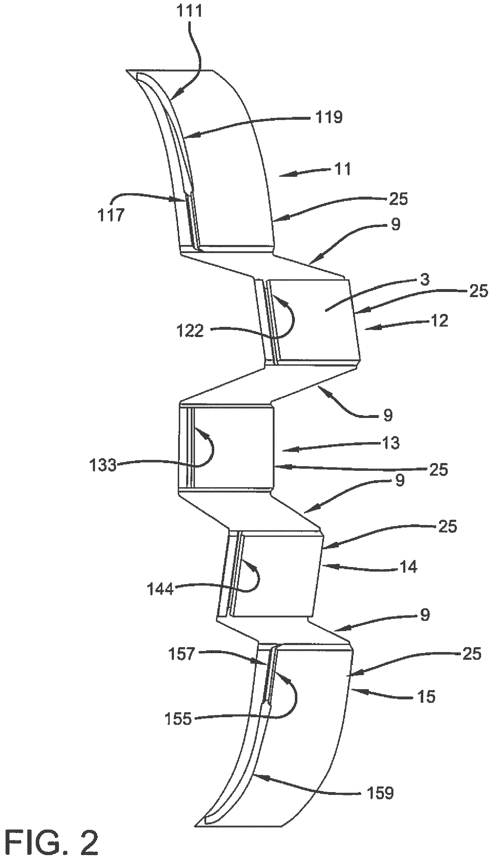

FIG. 2 is a schematic perspective view of part of the tire tread of FIG. 1 ;
FIG. 3 is a schematic perspective view of another part of the tire tread of FIG. 1;
FIG. 4 is a schematic side view of the tire tread of FIG. 1 in an ideally loaded condition; and
FIG. 5 is a schematic side detail of one of the sipes of FIG. 4.

### Detailed Description of Example Embodiments of the Present Invention

This description is made for the purpose of illustrating the present invention. The scope of the present invention is best determined by reference to the appended claims. The reference numerals as depicted in the drawings are the same as those referred to in this specification. Further structural elements of the example tire and tread can for instance be found in US-B-9,174,495.

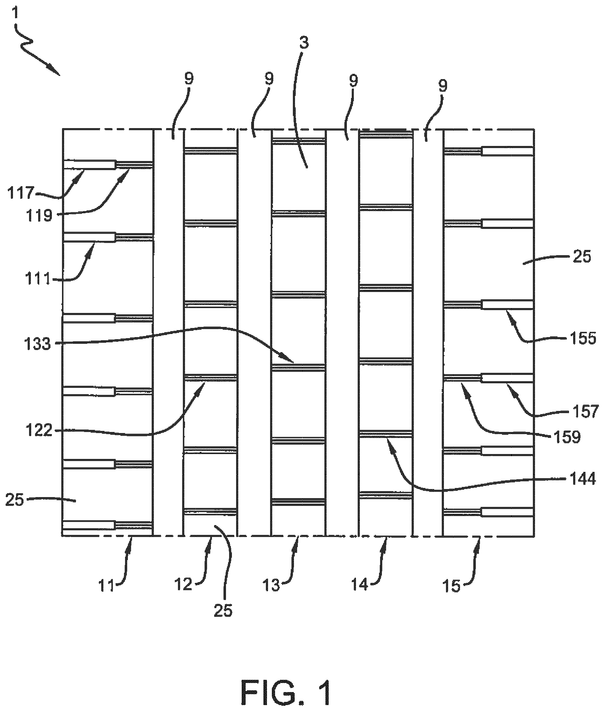

FIG. 1 shows an example pneumatic or non-pneumatic tire tread 1 having a contact surface 3, such as a road, and a first circumferential shoulder rib 11, a second circumferential intermediate rib 12, a third circumferential center rib 13, a fourth circumferential intermediate rib 14, and a fifth circumferential shoulder rib 15, each separated axially by a circumferential groove 9.

The tire tread 1 is preferably attached to a tire having a specified (or pre-defined) rotational direction.

The first rib 11 has axially extending first sipes 111. The second rib 12 has axially extending second sipes 122. The third rib 13 has axially extending third sipes 133. The fourth rib 14 has axially extending fourth sipes 144. The fifth rib 15 has axially extending fifth sipes 155.

In a preferred embodiment the first, second, third, fourth and fifth sipes 111, 122, 133, 144, 155 each extend axially straight and in parallel to the rotational axis of the tire 1 and thus perpendicular to the equatorial plane of the tire 1.

In a preferred embodiment axially neighboring sipes of the first, second, third, fourth and fifth sipes 111, 122, 133, 144, 155 are circumferentially offset.

In a preferred embodiment, the first sipes 111 and/or the fifth sipes 155 have axially outer straight portions 117, 157 axially transitioning to axially inner angled portions 119, 159, respectively.

The axially outer straight portions 117, 157 preferably extend axially in parallel to the rotational axis of the tire 1 and thus perpendicular to the equatorial plane of the tire 1. In a preferred embodiment, the at least one or both or the axially outer straight portions 117, 157 extends radially inwards straight in a plane perpendicular to the equatorial plane of the tire 1.

In a preferred embodiment, at least one or both of the axially inner angled portions 119, 159 are angled in a plane parallel to the tread surface either into the rotational direction of the tire or against the rotational direction of the tire (not shown in Fig. 1).

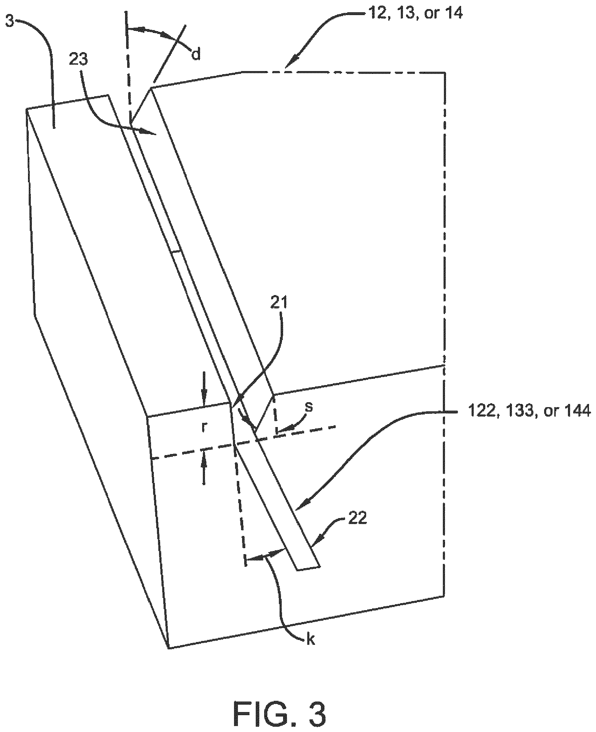

In a preferred embodiment, at least one or both of the axially inner angled portions 119, 159 are angled versus a plane perpendicular to the tread surface and through the tire axis (see Figures 3 to 5).

In a preferred embodiment, one or both the inner angled portions 119, 159 have an axial thickness or width in a range of from 15.0 mm to 30.0 mm, more preferably 17.0 mm to 26.0 mm or 21.0 mm to 23.0 mm such as 21.5 mm. Preferably, both inner angled portions 119, 159 have the same axial thickness or width.

In a preferred embodiment, at least one, two or all of the second, third and fourth ribs 122, 133, 144 have an axial thickness or width in a range of from 15.0 mm to 30.0 mm, more preferably 17.0 mm to 26.0 mm or 21.0 mm to 23.0 mm such as 21.5 mm. Preferably, the second and fourth ribs 122, 144 and more preferably also the third rib 133 have the same axial thickness or width.

Preferably, each inner angled portion 119, 159 and each sipe 122, 133, 144 or at least one or both of the inner angled portion 119, 159 and at least one or two of the sipes 122, 133, 144 has two parts, a radially upper part 21 preferably being open to the contact surface 3 and an adjacent radially lower part 22 preferably having a dead end at its radially innermost part.

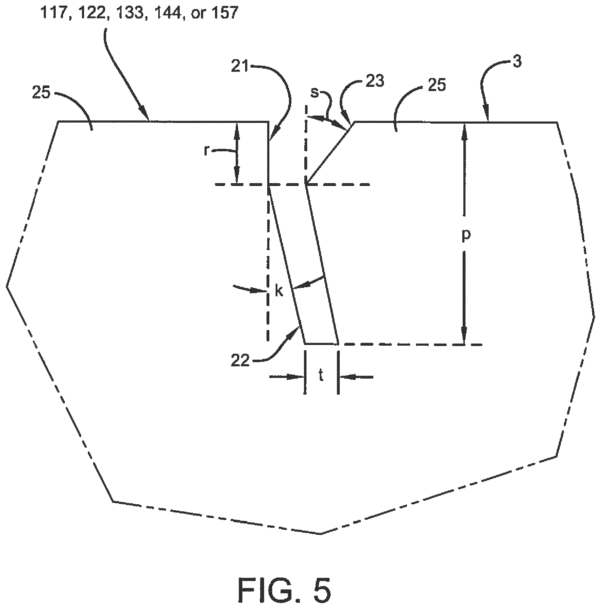

As shown in FIGS. 3 and 5, at least one or both of the inner angled portions 119, 159 of the first and fifth ribs 11, 15, and preferably also at least one, both or all of the second sipes 122, the third sipes 133, and the fourth sipes 144 extend in the radially lower part 22 radially inward (and circumferentially) at a first angle k to a radial depth p (as measured from the contact surface 3).

Preferably, the angle k is in a range of from 10 degrees to 30 degrees and more preferably in a range of from 17 degrees to 23 degrees such as 20 degrees. The angle k is measured versus a plane perpendicular to the tread surface and going through the tire axis (see Figures 3 to 5).

The radial depth p is preferably in a range of from 5.0 mm to 7.0 mm and more preferably in a range of from 5.5 mm to 6.5 mm such as 6.0 mm.

One wall of the radially upper part 21 preferably extends directly radially inward (or at an angle of 0 degree) from the contact surface 3 to a depth of r (as measured from the contact surface 3).

The depth r is preferably in a range of from 0.75 mm to 1.75 mm and more preferably in a range of from 1.00 mm to 1.50 mm such as 1.25 mm.

From the depth r on, both sides of the radially lower part 22 of the inner angled portions 119, 159 and the sipes 122, 133, 144 the preferably extend radially inward at the first angle k.

The angled radially lower part 22 has a preferably constant circumferential thickness t. The thickness t is preferably in a range of from 0.50 mm to 1.50 mm and more preferably from 0.75 mm to 1.25 mm such as 1.00 mm.

The other wall of the radially upper part 21 extends from the contact surface 3 radially inwardly toward the radially lower part radially outward from the radially lower part 22 at a second angle s to form a chamfer 23 at the radially outermost leading edge of one or both of the inner angled portions 119, 159 and preferably also of at least one, both or all of the sipes 122, 133, 144. The angle s is again measured versus a plane perpendicular to the tread surface and going through the tire axis (see Figures 3 to 5).

Said another way, this defines a structure of each tread element 25 or tread block of the ribs 11, 12, 13, 14, 15 having the chamfer 23 at the trailing edge (e.g., the final edge of a tread element or block to contact a road surface, etc.) of the tread elements 25. In this context, it is to be noted that, when looking into the circumferential direction and into the rotational direction, a tread element 25 has one part of a sipe, namely the trailing edge site of said sipe, on the leading edge site of the respective tread element 25, and one part of a circumferentially adjacent but different sipe, namely the leading edge site of said adjacent sipe, on the trailing edge site of the respective tread element 25.

The second angle s is preferably in a range of from 20 degrees to 40 degrees, and more preferably in a range of from 25 degrees to 35 degrees such as 30 degrees.

Conventionally, tread design optimization for braking tends to impact wet and dry braking in opposite directions. A general trend is that lower tread stiffness improves wet braking, but penalizes dry braking. The above described design of the tread and the sipes 111, 122, 133, 144, 155 allows an optimization of wet braking without the trade-off in dry braking.

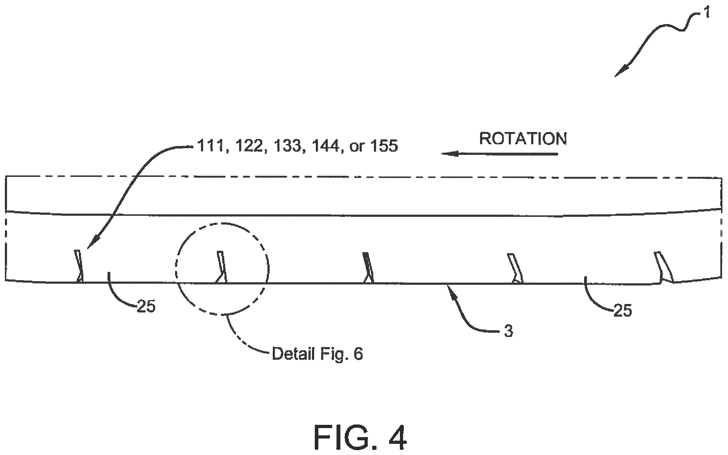

FIG. 4 illustrate an example of the sipes 111, 122, 133, 144, 155 of the tire tread 1 operating under wet braking conditions also showing the rotation direction of the respective tire.

## Claims

1. A tire having a tread (1), the tread (1) comprising a contact surface (3), a middle rib (13) formed by two circumferential grooves (9) extending along a tire circumferential direction, and at least one or two further ribs (12, 14) disposed axially outward from the middle rib (13) and a respective one of the two circumferential grooves (9), wherein at least one of said middle rib (13) and said at least one or two further ribs (12, 14) comprises a row of circumferentially extending tread elements (25) and a plurality of sipes (122, 133, 144), wherein the sipes (122, 133, 144) are inclined toward the rotational direction of the tire when moving from the contact surface (3) radially inwardly along the sipes (122, 133, 144) and wherein the tread elements (25) have a chamfer (23) at the respective trailing edge of the respective tread element (25).

2. The tire of claim 1 wherein the middle rib (13) and/or the at least or two one further ribs (12, 14) is formed by said row of circumferentially extending tread elements (25), and wherein said sipes (122, 133, 144) extend in the axial direction preferably fully across said middle rib (13) and/or said at least or one or two further ribs (12, 14) and thereby define and circumferentially delimit said tread elements (25).

3. The tire of claim 1 or 2 further comprising a first shoulder rib (11) disposed axially outward from the middle rib (13) and one of the two circumferential grooves (9), and a second shoulder rib (15) disposed axially outward from the middle rib (3) and the other of the two circumferential grooves (9), at least one or both of the first and the second shoulder ribs (11, 15) comprising a row of circumferentially extending tread elements (25) and a plurality of sipes (111, 155), said sipes (111, 155) having a first axially extending preferably axially outer portion (117, 157) and a second axially extending preferably axially inner portion (119, 159), wherein the second portion (119, 159) is inclined toward the rotational direction of the tire when moving from the contact surface (3) radially inwardly along the second portion (119, 159).

4. The tire of claim 3 wherein the first should rib (11) and/or the second shoulder rib (15) is formed by said row of circumferentially extending tread elements (25), and wherein said sipes (111, 155) extend in the axial direction preferably fully across said first and/or second shoulder rib (11, 15) and thereby define and circumferentially delimit said tread elements (25).

5. The tire of claim 3 or 4, wherein the tread elements (25) the first shoulder rib (11) and/or the second shoulder rib (15) have a chamfer (23) at the respective trailing edge of the respective tread element (25) either axially along the full axial width of the respective tread element (25) or at least axially along the second portion (119, 159).

6. The tire of claim 3, 4 or 5 wherein the first portion (117, 157) is not inclined toward the rotational direction of the tire when moving from the contact surface (3) radially inwardly along the second portion (119, 159) and preferably extends in parallel to the radial direction of the tire.

7. The tire of at least one of the previous claims wherein the chamfers (23) extend at an angle (s) in a range of from 20 degrees to 40 degrees, preferably in a range of from 25 degrees to 35 degrees or at an angle of 30 degrees, relative to a radial direction of the tire.

8. The tire of at least one of the previous claims wherein the sipes (122, 133, 144) in the middle rib and/or at least one or both of the further ribs (12, 14) and/or the second portions (119, 159) of at least one or both of the first and the second shoulder rib (11, 15) extend at an angle (k) in a range of from 10 degrees to 30 degrees, preferably in a range of from 17 degrees to 23 degrees or at an angle of 20 degrees, relative to a radial direction of the tire.

9. The tire of at least one of the previous claims wherein the middle rib (13) has an axial width in a range of from 15.0 mm to 30.0 mm, preferably in a range of from 17.0 mm to 26.0 mm or of 21.5 mm.

10. The tire of at least one of the previous claims wherein the sipes (111, 122, 133, 144, 155) have a radial depth (p) in a range of from 5.0 mm to 7.0 mm, preferably in a range of from 5.5 mm to 6.5 mm or of 6.0 mm.

11. The tire of at least one of the previous claims wherein the sipes (111, 122, 133, 144, 155) have radially upper part (21) and a radially lower part (22), the chamfer (23) forming an entire wall of one wall of the radially upper part (21), the radially upper part (21) preferably a radial depth (r) in a range of from 0.75 mm to 1.75 mm, preferably in a range of from 1.0 mm to 1.5 mm or of 1.25 mm.

12. The tire of at least one of the previous claims wherein the sipes (111, 122, 133, 144, 155) have a radially upper part (21) and a radially lower part (22), the radially lower part (22) having a uniform circumferential width (t) in a range of from 0.50 mm to 1.50 mm, preferably in a range of from 0.75 mm to 1.25 mm or of 1.0 mm.

13. The tire of at least one of the previous claims wherein the tire has a specified or pre-defined rotational direction.

14. The tire of at least one of the previous claims wherein axially neighboring sipes (111, 122, 133, 144, 155) in adjacent ribs (11, 12, 13, 14, 15) circumferentially offset against each other.

15. A tire tread comprising:
a middle rib (13) formed by two circumferential main grooves (9) extending along a tire circumferential direction;
a first shoulder rib (11) disposed axially outward from the middle rib (13) and one of the circumferential main grooves (9); and
a second shoulder rib (15) disposed axially outward from the middle rib (13) and the other of the two circumferential main grooves (9);
the middle rib (13) having a plurality of sipes (133) inclined oppositely with respect to a tire rotational direction such that the sipes (133) extend farther away from a rotational axis of the tire tread (1) as the sipes (133) extend in the tire rotational direction, the middle rib thereby comprising a row of circumferentially extending tread elements (25) having chamfers (23) at trailing edges of the tread elements (25).

## Patentansprüche

1. Reifen, der eine Lauffläche (1) aufweist, wobei die Lauffläche (1) eine Berührungsoberfläche (3), eine Mittelrippe (13), die durch zwei Umfangsrillen (9) ausgebildet wird, die sich entlang einer Reifenumfangsrichtung erstrecken, und wenigstens eine oder zwei weitere Rippen (12, 14) umfasst, die von der Mittelrippe (13) und einer jeweiligen der zwei Umfangsrillen (9) axial nach außen angeordnet sind, wobei die Mittelrippe (13) und/oder die wenigstens eine oder zwei weiteren Rippen (12, 14) eine Reihe von sich in Umfangsrichtung erstreckenden Laufflächenelementen (25) und mehrere Lamellen (122, 133, 144) umfasst, wobei die Lamellen (122, 133, 144) zu der Drehrichtung des Reifens hin geneigt sind, wenn sie sich von der Berührungsoberfläche (3) entlang der Lamellen (122, 133, 144) radial nach innen bewegen und wobei die Laufflächenelemente (25) eine Fase (23) an der jeweiligen Hinterkante des jeweiligen Laufflächenelements (25) aufweisen.

2. Reifen nach Anspruch 1, wobei die Mittelrippe (13) und/oder die wenigstens eine oder zwei weiteren Rippen (12, 14) durch die Reihe von sich in Umfangsrichtung erstreckenden Laufflächenelementen (25) ausgebildet sind und wobei die Lamellen (122, 133, 144) sich in der axialen Richtung vorzugsweise vollständig über die Mittelrippe (13) und/oder die wenigstens eine oder zwei weiteren Rippen (12, 14) erstrecken und wobei dadurch die Laufflächenelemente (25) definiert und in Umfangsrichtung begrenzt werden.

3. Reifen nach Anspruch 1 oder 2, der ferner eine erste Schulterrippe (11), die von der Mittelrippe (13) und einer der zwei Umfangsrillen (9) axial nach außen angeordnet ist, und eine zweite Schulterrippe (15) umfasst, die von der Mittelrippe (3) und der anderen der zwei Umfangsrillen (9) axial nach außen angeordnet ist, wobei wenigstens eine oder beide der ersten und der zweiten Schulterrippe (11, 15) eine Reihe von sich in Umfangsrichtung erstreckenden Laufflächenelementen (25) und mehrere Lamellen (111, 155) umfasst, wobei die Lamellen (111, 155) einen ersten sich axial erstreckenden, vorzugsweise axial äußeren Abschnitt (117, 157), und einen zweiten sich axial erstreckenden, vorzugsweise axial inneren Abschnitt (119, 159), aufweisen, wobei der zweite Abschnitt (119, 159) zu der Drehrichtung des Reifens hin geneigt ist, wenn er sich von der Berührungsoberfläche (3) entlang des zweiten Abschnitts (119, 159) radial nach innen bewegt.

4. Reifen nach Anspruch 3, wobei die erste Schulterrippe (11) und/oder die zweite Schulterrippe (15) durch die Reihe von sich in Umfangsrichtung erstreckenden Laufflächenelementen (25) ausgebildet wird und wobei die Lamellen (111, 155) sich in der axialen Richtung vorzugsweise vollständig über die erste und/oder die zweite Schulterrippe (11, 15) erstrecken und wobei dadurch die Laufflächenelemente (25) definiert und in Umfangsrichtung begrenzt werden.

5. Reifen nach Anspruch 3 oder 4, wobei die Laufflächenelemente (25) die erste Schulterrippe (11) und/oder die zweite Schulterrippe (15) eine Fase (23) an der jeweiligen Hinterkante des jeweiligen Laufflächenelements (25) entweder axial entlang der gesamten axialen Breite des jeweiligen Laufflächenelements (25) oder wenigstens axial entlang des zweiten Abschnitts (119, 159) aufweisen.

6. Reifen nach Anspruch 3, 4 oder 5, wobei der erste Abschnitt (117, 157) nicht zu der Drehrichtung des Reifens hin geneigt ist, wenn er sich von der Berührungsoberfläche (3) entlang des zweiten Abschnitts (119, 159) radial nach innen bewegt, und sich vorzugsweise zu der radialen Richtung des Reifens parallel erstreckt.

7. Reifen nach wenigstens einem der vorhergehenden Ansprüche, wobei sich die Fasen (23) in einem Winkel (s) in einem Bereich von 20 Grad bis 40 Grad, vorzugsweise in einem Bereich von 25 Grad bis 35 Grad oder in einem Winkel von 30 Grad, relativ zu einer radialen Richtung des Reifens erstrecken.

8. Reifen nach wenigstens einem der vorhergehenden Ansprüche, wobei sich die Lamellen (122, 133, 144) in der Mittelrippe und/oder wenigstens einer oder beiden der weiteren Rippen (12, 14) und/oder den zweiten Abschnitten (119, 159) von wenigstens einer oder beiden der ersten und der zweiten Schulterrippe (11, 15) in einem Winkel (k) in einem Bereich von 10 Grad bis 30 Grad, vorzugsweise in einem Bereich von 17 Grad bis 23 Grad oder in einem Winkel von 20 Grad, relativ zu einer radialen Richtung des Reifens erstrecken.

9. Reifen nach wenigstens einem der vorhergehenden Ansprüche, wobei die Mittelrippe (13) eine axiale Breite in einem Bereich von 15,0 mm bis 30,0 mm, vorzugsweise in einem Bereich von 17,0 mm bis 26,0 mm oder von 21,5 mm, aufweist.

10. Reifen nach wenigstens einem der vorhergehenden Ansprüche, wobei die Lamellen (111, 122, 133, 144, 155) eine radiale Tiefe (p) in einem Bereich von 5,0 mm bis 7,0 mm, vorzugsweise in einem Bereich von 5,5 mm bis 6,5 mm oder von 6,0 mm, aufweisen.

11. Reifen nach wenigstens einem der vorhergehenden Ansprüche, wobei die Lamellen (111, 122, 133, 144, 155) einen radial oberen Teil (21) und einen radial unteren Teil (22) aufweisen, wobei die Fase (23) eine gesamte Wand aus einer Wand des radial oberen Teils (21) ausbildet, wobei das radial obere Teil (21) vorzugsweise eine radiale Tiefe (r) in einem Bereich von 0,75 mm bis 1,75 mm, vorzugsweise in einem Bereich von 1,0 mm bis 1,5 mm oder von 1,25 mm, aufweist.

12. Reifen nach wenigstens einem der vorhergehenden Ansprüche, wobei die Lamellen (111, 122, 133, 144, 155) einen radial oberen Teil (21) und einen radial unteren Teil (22) aufweisen, wobei der radial untere Teil (22) eine gleichmäßige Umfangsbreite (t) in einem Bereich von 0,50 mm bis 1,50 mm, vorzugsweise in einem Bereich von 0,75 mm bis 1,25 mm oder von 1,0 mm, aufweist.

13. Reifen nach wenigstens einem der vorhergehenden Ansprüche, wobei der Reifen eine spezifizierte oder eine vordefinierte Drehrichtung aufweist.

14. Reifen nach wenigstens einem der vorhergehenden Ansprüche, wobei axial benachbarte Lamellen (111, 122, 133, 144, 155) in angrenzenden Rippen (11, 12, 13, 14, 15) in Umfangsrichtung gegeneinander versetzt sind.

15. Reifenlauffläche, die Folgendes umfasst:
eine Mittelrippe (13), die durch zwei Umfangshauptrillen (9) ausgebildet wird, die sich entlang einer Reifenumfangsrichtung erstrecken;
eine erste Schulterrippe (11), die von der Mittelrippe (13) und einer der Umfangshauptrillen (9) axial nach außen angeordnet ist; und
eine zweite Schulterrippe (15), die von der Mittelrippe (13) und der anderen der zwei Umfangshauptrillen (9) axial nach außen angeordnet ist;
wobei die Mittelrippe (13) mehrere Lamellen (133) aufweist, die hinsichtlich einer Reifendrehrichtung derart entgegengesetzt geneigt sind, dass sich die Lamellen (133) von einer Drehachse der Reifenlauffläche (1) weiter weg erstrecken als die Lamellen (133) sich in der Reifendrehrichtung erstrecken, wobei die Mittelrippe dadurch eine Reihe von sich in Umfangsrichtung erstreckenden Laufflächenelementen (25), die Fasen (23) an Hinterkanten der Laufflächenelemente (25) aufweisen, umfasst.

## Revendications

1. Bandage pneumatique qui possède une bande de roulement (1), la bande de roulement (1) comprenant une surface de mise en contact (3), une nervure médiane (13) que l'on obtient par l'intermédiaire de deux rainures circonférentielles (9) qui s'étendent dans une direction circonférentielle du bandage pneumatique, et au moins une ou deux nervures supplémentaires (12, 14) qui sont disposées dans la direction axiale à l'extérieur de la nervure médiane (13) et à l'extérieur d'une rainure circonférentielle respective parmi les deux rainures circonférentielles (9) ; dans lequel au moins une nervure choisie parmi ladite nervure médiane (13) et ladite ou lesdites au moins une ou deux nervures supplémentaires (12, 14) comprend ou comprennent une rangée d'éléments de bande de roulement qui s'étendent dans la direction circonférentielle et un certain nombre de lamelles (122, 133, 144) ; dans lequel les lamelles (122, 133, 144) sont inclinées dans la direction de rotation du bandage pneumatique lorsqu'on se déplace à partir de la surface de mise en contact (3) dans la direction radiale vers l'intérieur tout au long des lamelles (122, 133, 144) ; et dans lequel les éléments de bande de roulement (25) possèdent un chanfrein (23) au bord arrière respectif de l'élément de bande de roulement respectif (25).

2. Bandage pneumatique conformément à la revendication 1, dans lequel la nervure médiane (13) et/ou ladite ou lesdites au moins une ou deux nervures supplémentaires (12, 14) est ou sont formée(s) par ladite rangée d'éléments de bande de roulement (25) qui s'étendent dans la direction circonférentielle ; et dans lequel lesdites lamelles (122, 133, 144) s'étendent dans la direction axiale, de préférence complètement à travers ladite nervure médiane (13) et/ou à travers ladite ou lesdites au moins une ou deux nervures supplémentaires (12, 14) et définissent de cette manière, tout en les délimitant dans la direction circonférentielle, lesdits éléments de bande de roulement (25).

3. Bandage pneumatique conformément à la revendication 1 ou 2, qui comprend en outre une première nervure d'épaulement (11) qui est disposée dans la direction axiale à l'extérieur de la nervure médiane (13) et à l'extérieur d'une rainure parmi les deux rainures circonférentielles (9), et une deuxième nervure d'épaulement (15) qui est disposée dans la direction axiale à l'extérieur de la nervure médiane (13) et à l'extérieur de l'autre rainure parmi les deux rainures circonférentielles (9), au moins une nervure parmi la première et la deuxième nervure d'épaulement (11, 15) ou les deux nervures en question comprend ou comprennent une rangée d'éléments de bande de roulement (25) qui s'étendent dans la direction circonférentielle et un certain nombre de lamelles (111, 155), lesdites lamelles (111, 155) possédant une première portion externe qui s'étend dans la direction axiale, de préférence qui s'étend dans la direction axiale (117, 157) et une deuxième portion interne qui s'étend de préférence dans la direction axiale, de préférence qui s'étend dans la direction axiale (119, 159) ; dans lequel la deuxième portion (119, 159) est inclinée dans la direction de rotation du bandage pneumatique lorsqu'on se déplace à partir de la surface de mise en contact (3) dans la direction radiale vers l'intérieur le long de la deuxième portion (119, 159).

4. Bandage pneumatique conformément à la revendication 3, dans lequel la première nervure d'épaulement (11) et/ou la deuxième nervure d'épaulement (15) est ou sont formée(s) par ladite rangée d'éléments de bande de roulement (25) qui s'étendent dans la direction circonférentielle; et dans lequel lesdites lamelles (111, 155) s'étendent dans la direction axiale de préférence complètement à travers ladite première et/ou ladite deuxième nervure(s) d'épaulement (11, 15) et définissent de cette manière, tout en les délimitant dans la direction circonférentielle, lesdits éléments de bande de roulement (25).

5. Bandage pneumatique conformément à la revendication 3 ou 4, dans lequel les éléments de bande de roulement (25), la première nervure d'épaulement (11) et/ou la deuxième nervure d'épaulement (15) possède(nt) un chanfrein (23) au bord arrière respectif de l'élément de bande de roulement respectif (25), soit dans la direction axiale sur toute la largeur axiale de l'élément de bande de roulement respectif (25), soit au moins dans la direction axiale le long de la deuxième portion (119, 159).

6. Bandage pneumatique conformément à la revendication 3, 4 ou 5, dans lequel la première portion (117, 157) n'est pas inclinée dans la direction de rotation du bandage pneumatique lorsqu'on se déplace à partir de la surface de mise en contact (3) dans la direction radiale vers l'intérieur le long de la deuxième portion (119, 159) et de préférence s'étend parallèlement à la direction radiale du bandage pneumatique.

7. Bandage pneumatique conformément à au moins une des revendications précédentes, dans lequel les chanfreins (23) s'étendent en formant un angle (s) qui se situe dans une plage de 20 degrés à 40 degrés, de préférence dans une plage de 25 degrés à 35 degrés ou en formant un angle qui s'élève à 30 degrés, par rapport à une direction radiale du bandage pneumatique.

8. Bandage pneumatique conformément à au moins une des revendications précédentes, dans lequel les lamelles (122, 133, 144) dans la nervure médiane et/ou au moins une des deux nervures supplémentaires (12,14) ou les deux nervures en question et/ou les deuxièmes portions (119, 159) d'au moins une nervure d'épaulement parmi la première et la deuxième nervure d'épaulement (11, 15) ou des deux nervures en question s'étendent en formant un angle (k) qui se situe dans une plage de 10 degrés à 30 degrés, de préférence dans une plage de 17 degrés à 23 degrés ou en formant un angle qui s'élève à 20 degrés par rapport à une direction radiale du bandage pneumatique.

9. Bandage pneumatique conformément à au moins une des revendications précédentes, dans lequel la nervure médiane (13) possède une largeur axiale qui se situe dans une plage de 15,0 mm à 30,0 mm, de préférence dans une plage de 17,0 mm à 26,0 mm ou qui s'élève à 21,5 mm.

10. Bandage pneumatique conformément à au moins une des revendications précédentes, dans lequel les lamelles (111, 122, 133, 144, 155) possèdent une profondeur radiale (p) qui se situe dans une plage de 5,0 mm à 7,0 mm, de préférence dans une plage de 5,5 mm à 6,5 mm ou qui s'élève à 6,0 mm.

11. Bandage pneumatique conformément à au moins une des revendications précédentes, dans lequel les lamelles (111, 122, 133, 144, 155) possèdent possède une partie supérieure (21) qui s'étend dans la direction radiale et une partie inférieure (22) qui s'étend dans la direction radiale, le chanfrein (23) formant une paroi entière d'une paroi de la partie supérieure (21) qui s'étend dans la direction radiale, la partie supérieure (21) qui s'étend dans la direction radiale possédant de préférence une profondeur radiale (r) qui se situe dans une plage de 0,75 mm à 1,75 mm, de préférence dans une plage de 1,0 mm à 1,5 mm, ou qui s'élève à 1,25 mm.

12. Bandage pneumatique conformément à au moins une des revendications précédentes, dans lequel les lamelles (111, 122, 133, 144, 155) possèdent possède une partie supérieure (21) qui s'étend dans la direction radiale et une partie inférieure (22) qui s'étend dans la direction radiale, la partie inférieure (22) qui s'étend dans la direction radiale possédant une largeur circonférentielle uniforme (t) qui se situe dans une plage de 0,50 mm à 1,50 mm, de préférence dans une plage de 0,75 mm à 1,25 mm ou qui s'élève à 1,0 mm.

13. Bandage pneumatique conformément à au moins une des revendications précédentes, dans lequel le bandage pneumatique possède une direction de rotation qui a été spécifiée ou qui a été prédéfinie.

14. Bandage pneumatique conformément à au moins une des revendications précédentes, dans lequel des lamelles voisines qui s'étendent dans la direction axiale (111, 122, 133, 144, 155) dans des nervures adjacentes (11, 12, 13, 14, 15) sont décalées dans la direction circonférentielle les unes par rapport aux autres.

15. Bande de roulement pour un bandage pneumatique, qui comprend :
une nervure médiane (13) qui est formée par deux rainures principales circonférentielles (9) qui s'étendent dans une direction circonférentielle du bandage pneumatique ;
une première nervure d'épaulement (11) qui est disposée dans la direction axiale à l'extérieur de la nervure médiane (13) et à l'extérieur d'une des rainures principales circonférentielles (9) ; et
une deuxième nervure d'épaulement (15) qui est disposée dans la direction axiale à l'extérieur de la nervure médiane (13) et à l'extérieur de l'autre rainure parmi les deux rainures principales circonférentielles (9) ;
la nervure médiane (13) possédant un certain nombre de lamelles (133) qui sont inclinées dans une direction qui est opposée à une direction de rotation du bandage pneumatique, d'une manière telle que les lamelles (133) s'étendent plus loin par rapport à l'axe de rotation de la bande de roulement (1) du bandage pneumatique que les lamelles (133) qui s'étendent dans la direction de rotation du bandage pneumatique, la nervure médiane comprenant de cette manière une rangée d'éléments de bande de roulement (25) qui s'étendent dans la direction circonférentielle, qui possèdent des chanfreins (23) aux bords arrière des éléments de bande de roulement (25).
